# EUROPÄISCHE PATENTSCHRIFT

(11) **EP 0 439 698 B1**
(45) Veröffentlichungstag und Bekanntmachung des Hinweises auf die Patenterteilung: **22.12.1993**
(21) Anmeldenummer: 90121254.8
(22) Anmeldetag: 07.11.1990
(51) Int. Cl.: A01N 33/00, C08G 73/04

(54) **Verfahren zur Herstellung von biozid wirksamen polymeren Guanidinsalzen**
Process for the preparation of polymeric guanidine salts active as biocides
Procédé pour la préparation de sels de guanidine polymèriques actifs comme biocides

(30) Priorität: 27.01.1990 DE 4002403
(43) Veröffentlichungstag der Anmeldung: 07.08.1991
(73) Patentinhaber: Degussa Aktiengesellschaft, 60311 Frankfurt (DE)
(72) Erfinder: Werle, Peter, Dr., W-6460 Gelnhausen 2 (DE); Trageser, Martin, W-6460 Gelnhausen (DE); Stober, Reinhard, Dr., W-6467 Hasselroth 2 (DE)

(56) Entgegenhaltungen:
- EP-A- 0 338 430
- DE-A- 3 635 459
- GB-A- 1 531 717
- US-A- 2 325 586
- US-A- 2 336 605

## Beschreibung

Die Erfindung betrifft ein Verfahren zur Herstellung biozid wirksamer Guanidinsalze durch Umsetzung von Di- oder Polyaminen mit Chlorcyan mit nachfolgender Polymerisation des zunächst gebildeten Cyanamids. Die polymeren Guanidinsalze sind wasserlöslich und eignen sich zur direkten Anwendung als Biozid oder zur Herstellung solche polymere Guanidinsalze enthaltender biozider Mittel.

Aus der US-PS 2.325.586 sind polymere Guanidine und Salze davon sowie Verfahren zu ihrer Herstellung bekannt. Die polymeren Guanidinsalze lassen sich aus Diaminen durch Umsetzung mit einem Halogencyan und nachfolgender Polymerisation gewinnen. Für die Umsetzung wurde die Verwendung eines neutralen wasserfreien Lösungsmittels mit einem Siedepunkt unter 200 °C zwingend vorgeschrieben. Die Polymerisation konnte in Gegenwart oder in Abwesenheit eines Lösungsmittels bei Temperaturen im Bereich von etwa 80 bis 250 °C durchgeführt werden. Wie aus den relevanten Beispielen der US-PS 2,325,586 sowie der US-PS 2,336,605 - Umsetzung von Hexamethylendiamin mit Bromcyan in Ethanol und Polymerisation - hervorgeht, mußte nicht nur ein absolutes organisches Lösungsmittel verwendet werden, sondern die erforderliche Lösungsmittelmenge war auch sehr hoch; die Polymerisation erfolgte duch 25 stündiges Kochen am Rückfluß oder, nach Abdestillieren des Lösungsmittels, durch 7 stündiges Erhitzen auf 175 °C unter vermindertem Druck. Alle diese Maßnahmen minderten die Wirtschaftlichkeit des Verfahrens.

Aus der US-PS 2,336,605 ist bekannt, die vorgenannten polymeren Guanidinsalze zur Bekämpfung von Bakterien, Pilzen und Insekten einzusetzen.

Die Aufgabe der vorliegenden Erfindung bestand somit darin, das gattungsgemäße Verfahren dahingehend zu verbesssern, daß sich die Verwendung großer Mengen absoluter Lösungsmittel erübrigt und die Polymerisationszeit verkürzt werden kann, ohne die Biozidwirksamkeit gegenüber nach dem vorbekannten Verfahren hergestellten Produkten zu mindern.

Gelöst wird die Aufgabe durch ein Verfahren zur Herstellung von biozid wirksamen polymeren Guanidinsalzen durch Umsetzung eines Diamins oder Polyamins der allgemeinen Formel (I) 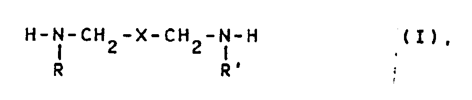
worin R und R', welche gleich oder verschieden sein können, Wasserstoff oder eine C₁ - bis C₆-Alkylgruppe bedeuten und X eine lineare oder verzweigte Alkylengruppe mit 2 bis 16 C-Atomen, welche durch eine oder mehrere isolierte -O- oder -NR''- Gruppen unterbrochen sein kann und worin R'' für Wasserstoff oder eine C₁ - bis C₁₈-Alkylgruppe steht, oder eine 1,2-, 1,3- oder 1,4-Cyclohexylen- oder 1,2- oder 1,3-Cyclopentylengruppe, mit Chlorcyan im Molverhältnis von im wesentlichen 1 zu 1 und anschließende Polymerisation bei einer Temperatur oberhalb 60 °C, das dadurch gekennzeichnet ist, daß man die Umsetzung und Polymerisation in Gegenwart von Wasser in einer Menge von bis zu 2 Gew.-teilen pro Gew.-teil Di- oder Polyamin oder in Abwesenheit von Lösungsmitteln durchführt. Die weiteren Ansprüche richten sich auf bevorzugte Ausführungsformen des Verfahrens.

Das erfindungsgemäße Verfahren umfaßt zwei Stufen, nämlich die Umsetzung des Di- oder Polyamins mit Chlorcyan im Molverhältnis von im wesentlichen 1 zu 1 und die Polymerisation des intermediär gebildeten Hydrochlorids des Monocyanamids des Di- oder Polyamins. Der Kern der Erfindung besteht nun darin, daß überraschenderweise beide Stufen in Abwesenheit eines Lösungsmittels oder in Gegenwart einer nach oben begrenzten Menge Wasser durchgeführt werden können.

Gemäß der lösungsmittelfreien Ausführungsform werden das Di- oder Polyamin unter intensivem Mischen und unter Einhaltung einer Temmperatur im Bereich von 0 bis 60 °C mit flüssigem oder gasförmigem Chlorcyan umgesetzt. Ein Molverhältnis von im wesentlichen 1 zu 1 bedeutet, daß ein geringer Überschuß eines Reaktanden möglich ist, um ggf. auftretende Verluste oder Nebenreaktionen zu berücksichtigen; allerdings muß sichergestellt werden, daß es bei der Polymerisation zu keiner Vernetzung kommt. Die Umsetzung mit Chlorcyan ist stark exotherm, so daß im allgemeinen eine Kühlung erforderlich ist. Nach beendeter Umsetzung - kein weiterer Rückfluß von Chlorcyan - wird das Reaktionsgemisch erwärmt, und die Polymerisation findet im Temperaturbereich von über 60 bis 120 °C, vorzugsweise zwischen 70 und 90 °C, innerhalb weniger Minuten - etwa 3 bis 30 Minuten, vorzugsweise 5 bis 15 Minuten, statt. Nach Bedarf kann das im allgemeinen zähe polymere Guanidinsalz durch Zugabe von Wasser oder/und Alkoholen, vorzugsweise in der Wärme, in eine leicht handhabbare Lösung überführt werden. Eine solche Lösung eignet sich auch zur an sich bekannten Überführung des Hydrochlorids in andere Salze über die polymere Guanidinbase.

Die lösungsmittelfreie Ausführungsform des Verfahrens kann vorzugsweise in Reaktoren ausgeführt werden, welche ein kleines Reaktionsvolumen in einer kühl und mischbaren Reaktionszone für die Umsetzung aufweisen und nachgeschaltet eine heizbare Reaktionszone für die Polymerisation. Vorteilhaft sind Reaktoren mit selbstreinigenden kühl- und heizbaren Doppelschnecken.

Eine weitere Ausführungsform des Verfahrens besteht darin, daß die Umsetzung und Polymerisation in Gegenwart von Wasser durchgeführt werden, wobei in der ersten Stufe zusätzlich auch unter den Betriebsbedingungen inerte organische Lösungsmittel, insbesondere wasserlösliche Lösungsmittel mit einem Siedepunkt unter 95 °C zugegen sein können. Diese organischen Lösungsmittel, vorzugsweise Methanol oder Ethanol, werden vor der eigentlichen Polymerisation abdestilliert; soweit erforderlich, wird vor oder während des Abdestillierens Wasser in der Menge zugefügt, welche während der Polymerisation erwünscht ist.

Überraschenderweise gelangt man nur dann zu wasserlöslichen polymeren Guanidinsalzen mit der vorbekannten bioziden Wirksamkeit, wenn die Wassermenge während der ersten Stufe 2 Gew.-teile, vorzugsweise 1 Gew.-teil pro 1 Gew.-teil Di- oder Polyamin nicht überschreitet. Bei einem Gewichtsverhältnis von größer 2 zu 1 kommt es rasch zur Bildung wasserunlöslicher Produkte, deren Struktur nicht näher bekannt ist. Die Umsetzung mit flüssigem oder gasförmigem Chlorcyan erfolgt bei 0 bis 50 °C, vorzugsweise 0 bis 20 °C. Bei der Umsetzung in wäßrigem Medium ist eine pH-Kontrolle empfehlenswert: bevorzugt wird die Einhaltung eines pH-Wertes über 7, insbesondere um 8; bei einem pH-Wert von 11-12 liegt noch ein Aminüberschuß vor; bei einem pH-Wert unter 7 gelangt man bei der anschließenden Polymerisation zu Polymeren mit nur geringer biozider Wirksamkeit.

Nach beendeter erster Stufe und Abdestillieren von ggf. anwesenden niedrigsiedenden, organischen Lösungsmitteln wird die Polymerisation des Reaktionsproduktes in Gegenwart von im wesentlichen Wasser, vorzugsweise 0,5 bis 2 Gew.-teilen pro Gew.-teil eingesetztes Di- oder Polyamin, durch Erwärmen auf 80 bis 120 °C, innerhalb von 0,2 bis 2 Stunden durchgeführt. Eine Temperatur von 80 bis 100 °C und eine Polymerisationsdauer von 30 bis 90 Minuten wird bevorzugt; bei einer Temperatur über 100 °C wendet man den erforderlichen Druck an. Bei der Polymerisation eines Umsetzungsproduktes von Hexamethylendiamin mit Chlorcyan in Gegenwart von 1 Gew.-teil Wasser pro Gew.-teil eingesetztes Hexamethylendiamin bei 100 °C wird die Lösung des polymeren Guanidins nach 30 Minuten so viskos, daß der Rührer zum Stehen kommt; die Polymerisation bei 80 °C führt in 90 Minuten zu mittelviskosen Lösungen des polymeren Guanidinhydrochlorids; die biozide Wirksamkeit ist in beiden Fällen etwa gleich. Aus der wäßrigen Lösung des polymeren Guanidinsalzes kann in bekannter Weise, etwa durch Abdestillieren des Wassers unter vermindertem Druck, das Salz in Substanz isoliert werden.

Besonders vorteilhaft werden beide Stufen in Abwesenheit eines organischen Lösungsmittels in wäßriger Lösung durchgeführt - 0,5 bis 1 Gew.-teil Wasser pro Gew.-teil Di- oder Polyamin. Die nach beendeter Polymerisation erhaltende wäßrige Lösung kann, vorzugsweise in der Wärme, mit Wasser und/oder wasserlöslichen Lösungsmitteln verdünnt werden, um die gewünschte Konzentration einzustellen. Wie bereits zuvor ausgeführt, kann das Hydrochlorid über die freie Base in andere Salze überführt werden.

Gemäß einer bevorzugten Ausführungsform des Verfahrens werden Di- bzw. Triamine der allgemeinen Formel (I) eingesetzt, worin R und R' Wasserstoff bedeuten und X für eine unverzweigte Alkylengruppe mit 4 bis 10 C-Atomen oder eine Diethylenaminogruppe steht. Hexamethylendiamin wird besonders bevorzugt.

Die erfindungsgemäß hergestellten Produkte und Lösungen sind einfach und mit höherer Raum-Zeit-Ausbeute herstellbar, als dies nach dem vorbekannten Verfahren möglich war. Absolute organische Lösungsmittel sind nicht erforderlich, weil in Abwesenheit von Lösungsmitteln oder in wäßriger Phase die Umsetzung und Polymerisation erfolgen.

Die aus erfindungsgemäß hergestellten Salzen bzw. wäßrigen Lösungen polymerer Guanidinsalze herstellbaren bioziden Mittel können außer dem polymeren Guanidinsalz und geeigneten Lösungsmitteln auch andere systemverträgliche biozid wirksame Komponenten und Hilfsstoffe enthalten. Durch die Kombination der polymeren Guanidinsalze mit einem oder mehreren strukturähnlichen Bioziden, z. B. quaternären Ammoniumsalzen oder Bioziden anderer Stoffklassen, wie z. B. heterocyclischen Thiocyanaten, kann das Wirkungsspektrum erheblich erweitert werden. Sofern wasser- und/oder alkoholunlösliche Biozide mitverwendet werden, ist es vorteilhaft, zusätzlich auch Suspensionshilfsmittel einzusetzen.

Die bioziden Mittel, welche sich im wesentlichen durch Vereinigen der Komponenten unter Rühren und ggf. Erwärmen herstellen lassen, können in der Wasserbehandlung zur Bekämpfung von Bakterien, Pilzen und Algen, aber auch zur Bekämpfung dieser Keime in technischen Materialien, wie Dispersionen, oder auf Oberflächen eingesetzt werden.

Die nachfolgenden Beispiele verdeutlichen das erfindungsgemäße Verfahren.

### Beispiel 1

116 g (1 Mol) Hexamethylendiamin werden in 150 ml wasserhaltigem Methanol (98 %ig) vergelegt und auf 0 bis 5 °C abgekühlt. Unter intensivem Rühren läßt man bei 5 bis 10 °C 61,5 g (51 ml, 1 Mol) flüssiges Chlorcyan zutropfen. Nach 30 Minuten Nachreaktion bei Raumtemperatur erwärmt man das Reaktionsgemisch und destilliert den Alkohol ab; gleichzeitig läßt man 150 ml Wasser zulaufen und erwärmt 2 Stunden unter Rückfluß. Die schwach trübe Lösung wird mit 670 ml Wasser versetzt und klarfiltriert; der Gehalt an polymerem Hexamethylenguanidin-hydrochlorid beträgt 20 Gew.-%.

### Beispiel 2

116 g (1 Mol) Hexamethylendiamin werden in 90 ml Wasser gelöst. Bei 5 bis 10 °C tropft man unter Kühlen und Rühren 61,5 g Chlorcyan (1 Mol) Chlorcyan zu. Nach 15 minütiger Nachreaktion bei etwa 20 °C wird zum Rückfluß erwärmt; nach 30 Minuten wird die Polymerisation beendet und die Lösung durch Zugabe von Wasser verdünnt. Die Biozidwirksamkeit des in Wasser hergestellten Produktes entspricht im wesentlichen jener des gemäß US-PS 2,336,605 hergestellten Produktes.

### Vergleichsbeispiel

58 g (0,5 Mol) Hexamethylendiamin werden in 200 ml Wasser gelöst. Bei 5 bis 10 °C tropft man unter Kühlen und Rühren 30.8 g Chlorcyan (0.5 Mol) zu. Die exotherme Reaktion führt zur Bildung durchsichtiger, gummiartiger Polymerbröckchen, die in der übrigen, klaren Lösung schwimmen bzw. sich an den Wandungen absetzen und auch durch mehrstündiges Erwärmen zum Rückfluß nicht in Lösung gebracht werden können. Biozide Wirksamkeit ist nicht gegeben.

### Beispiel 3

23,2 g (0,2 Mol) Hexamethylendiamin werden in einem druckfesten Reaktionsgefäß vorgelegt, dessen Mischorgan so gestaltet ist, daß an den Wandungen keine toten Zonen verbleiben. Zu dem auf 5 °C gekühlten und gerührten Kristallbrei werden 10,2 ml (0,2 Mol) Chlorcyan getropft. Die stark exotherme Reaktion wird durch äußere Kühlung auf 50 °C begrenzt. Dabei geht das Chlorcyan teilweise unter Rückfluß. Nach beendeter ClCN-Zugabe und Wegnahme der Kühlung erfolgt rasche, exotherme Polymerisation unter Temperaturerhöhung auf 80 °C. Die Polymerisation zu Poly(hexamethylenguanidin-hydrochlorid) vollzieht sich innerhalb von etwa 5 Minuten. Das zähviskose Produkt wird durch Zugabe von Wasser bei 50 bis 70 °C zu einer gut handhabbaren Lösung verdünnt und, sofern erforderlich, durch Filtration von einer minimalen Menge (mg-Bereich) an Trübstoffen befreit.

## Patentansprüche

1. Verfahren zur Herstellung von biozid wirksamen polymeren Guanidinsalzen durch Umsetzung eines Diamins oder Polyamins der allgemeinen Formel (I) 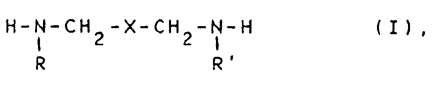 worin R und R', welche gleich oder verschieden sein können, Wasserstoff oder eine C₁- bis C₆-Alkylgruppe bedeuten und X eine lineare oder verzweigte Alkylengruppe mit 2 bis 16 C-Atomen, welche durch eine oder mehrere isolierte -O- oder -NR''- Gruppen unterbrochen sein kann und worin R'' für Wasserstoff oder eine C₁ - bis C₁₈-Alkylgruppe steht, oder eine 1,2-, 1,3- oder 1,4-Cyclohexylen- oder 1,2- oder 1,3-Cyclopentylengruppe, mit Chlorcyan im Molverhältnis von im wesentlichen 1 zu 1 und anschließender Polymerisation bei einer Temperatur oberhalb 60 °C,
dadurch gekennzeichnet,
daß man die Umsetzung und Polymerisation in Gegenwart von Wasser in einer Menge von bis zu 2 Gew.-teilen pro Gew.-teil Di- oder Polyamin oder in Abwesenheit von Lösungsmitteln durchführt.

2. Verfahren nach Anspruch 1,
dadurch gekennzeichnet,
daß man es in Abwesenheit eines Lösungsmittels durchführt, indem unter intensivem Mischen und unter Einhaltung einer Temperatur im Bereich von 0 bis 60 °C das Di- oder Polyamin mit Chlorcyan zur Reaktion gebracht und anschließend durch Steigerung der Temperatur auf über 60 bis 120 °C, vorzugsweise 70 bis 90 °C, polymerisiert wird.

3. Verfahren nach Anspruch 2,
dadurch gekennzeichnet,
daß man es in einem mit einer kühlbaren und einer anschließenden heizbaren Reaktionszone und Intensivmischeinrichtung versehenen Reaktor mit kleinem Reaktionsvolumen durchführt, wobei die Umsetzung mit Chlorcyan in der kühlbaren und die Polymerisation in der heizbaren Reaktionszone erfolgt.

4. Verfahren nach Anspruch 1,
dadurch gekennzeichnet,
daß man die Umsetzung des Di- oder Polyamins mit Chlorcyan in Gegenwart eines Wasser enthaltenden, unter 95 °C siedenden organischen Lösungsmittels oder vorzugsweise in Wasser allein, wobei die Wassermenge auf 2 Gew.-teile pro Gew.-teil Di- oder Polyamin begrenzt wird, bei einer Temperatur von 0 bis 50 °C durchführt und anschließend, soweit vorhanden, organische Lösungsmittel abdestilliert und, soweit erforderlich, Wasser in einer solchen Menge zufügt, daß der Wassergehalt im Bereich 0,5 bis 2,0 Gew.-teilen pro Gew.-teil Di- oder Polyamin liegt, und durch Erwärmen auf 80 bis 120 °C innerhalb von 0,2 bis 2 Stunden die Polymerisation durchführt.

5. Verfahren nach Anspruch 4,
dadurch gekennzeichnet,
daß man zu einem Gemisch aus 1 Gew.-teil Di- oder Polyamin 0,5 bis 1,0 Gew.-teile Wasser unter Aufrechterhaltung einer Temperatur von 0 bis 50 °C, vorzugsweise +5 bis 20 °C, flüssiges Chlorcyan zugibt und anschließend auf 80 bis 100 °C erwärmt und innerhalb von 30 bis 90 Minuten polymerisiert.

6. Verfahren nach einem der Ansprüche 1 bis 5,
dadurch gekennzeichnet,
daß man ein Di- oder Triamin der allgemeinen Formel (I) einsetzt, worin R und R' Wasserstoff bedeuten und X für eine unverzweigte Alkylengruppe mit 4 bis 10 C-Atomen oder eine Diethylenaminogruppe steht.

## Claims

1. A process for the preparation of biocidally active polymeric guanidine salts by the reaction of a diamine or polyamine corresponding to the general formula (I) 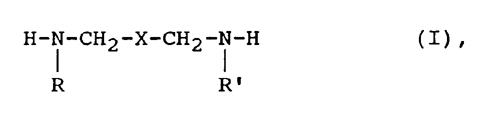 wherein R and R', which may be identical or different, denote hydrogen or a C₁- to C₆-alkyl group and X denotes a straight chain or branched alkylene group having 2 to 16 C-atoms which may be interrupted by one or more isolated -O- or -NR''- groups wherein R'' stands for hydrogen or a C₁- to C₁₈-alkyl group or a 1,2-, 1,3- or 1,4-cyclohexylene- or 1,2- or 1,3-cyclopentylene group, with cyanogen chloride in a molar ratio of substantially 1 to 1 followed by polymerisation at a temperature above 60°C, characterised in that the reaction and polymerisation are carried out in the presence of water in a quantity of up to 2 parts by weight per part by weight of di- or polyamine or in the absence of solvents.

2. A process according to Claim 1, characterised in that it is carried out in the absence of a solvent by bringing the di- or polyamine to a reaction with cyanogen chloride with intensive mixing and while maintaining a temperature of from 0 to 60°C and then polymerising by raising the temperature to above 60 to 120°C, preferably 70 to 90°C.

3. A process according to Claim 2, characterised in that it is carried out in a reactor of small reaction volume provided with a coolable reaction zone followed by a heatable reaction zone and an intensive mixing device, the reaction with cyanogen chloride being carried out in the coolable reaction zone and polymerisation in the heatable reaction zone.

4. A process according to Claim 1, characterised in that the reaction of the di- or polyamine with cyanogen chloride is carried out in the presence of an organic solvent which boils below 95°C and contains water or preferably in water alone, the quantity of water being limited to 2 parts by weight per part by weight of di- or polyamine, at a temperature of from 0 to 50°C, and any organic solvent present is then distilled off and, if necessary, water is added in such a quantity that the water content is in the region of from 0.5 to 2.0 parts by weight per part by weight of di- or polyamine and polymerisation is carried out by heating to 80 - 120°C for 0.2 to 2 hours.

5. A process according to Claim 4, characterised in that liquid cyanogen chloride is added to a mixture of 1 part by weight of di- or polyamine and from 0.5 to 1.0 part by weight of water while a temperature of from 0 to 50°C, preferably from 5 to 20°C is maintained and the mixture is subsequently heated to a temperature of 80 to 100°C and polymerisation is carried out within 30 to 90 minutes.

6. A process according to one of the Claims 1 to 5, characterised in that a di- or triamine of the general formula (I) is used, wherein R and R' denote hydrogen and X stands for a straight chain alkylene group having 4 to 10 carbon atoms or a diethyleneamino group.

## Revendications

1. Procédé de préparation de sels de guanidine polymères à effets biocides par réaction d'une amine ou polyamine de formule (I) : 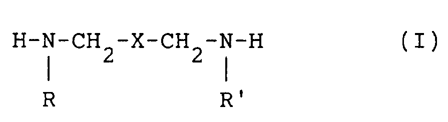 dans laquelle R et R', qui peuvent être identiques ou différents, représentent l'hydrogène ou un groupe alkyle en C₁ à C₆ et X est un groupe alkylène linéaire ou ramifié avec 2 à 16 atomes de C, qui peut être partagé par un ou plusieurs groupes isolés -0- ou -NR- et dans lequel R'' est l'hydrogène ou un groupe alkyle C₁ à C₁₈, ou un groupe 1,2-, 1,3- ou 1,4-cyclohexylène ou 1,2- ou 1,3-cyclopentylène avec du chlorure de cyanogène en proportion molaire essentiellement de 1 pour 1 et polymérisation successive à une température supérieure à 60°C, caractérisé en ce qu'on réalise la réaction et polymérisation successive en présence d'eau à une concentration pouvant atteindre 2 parties en poids par partie en poids de di- ou polyamine ou en l'absence de solvant.

2. Procédé selon la revendication 1, caractérisé en ce qu'on met en réaction en absence de solvant la di- ou polyamine avec le chlorure de cyanogène sous agitation énergique et en maintenant la température entre 0 et 60°C, et ensuite en augmentant la température au-dessus de 60°C et jusqu'à 120°C, de préférence entre 70 et 90°C, on polymérise.

3. Procédé selon la revendication 2, caractérisé en ce qu'on le réalise dans un réacteur muni d'une zone de réaction qu'on peut refroidir et d'une zone consécutive qu'on peut chauffer, muni d'un dispositif d'agitation énergique et avec un petit volume de réaction, la réaction avec le chlorure de cyanogène a lieu dans la zone de réaction qu'on peut refroidir et la polymérisation dans la zone qu'on peut chauffer.

4. Procédé selon la revendication 1, caractérisé en ce qu'on réalise la réaction de la di- ou polyamine avec le chlorure de cyanogène en présence d'un solvant organique contenant de l'eau et bouillant en-dessous de 95°C, ou de préférence dans l'eau seulement, la quantité d'eau étant limitée à 2 parties en poids par partie en poids de di- ou polyamine, à une température comprise entre 0 et 50°C et ensuite, s'il y en a, on élimine par distillation le solvant organique et, si nécessaire on ajoute de l'eau en quantité telle que la teneur en eau se situe dans l'intervalle de 0,5 à 2,0 parties en poids par partie en poids de di- ou polyamine, et en réchauffant entre 80 et 120°C en 0,2 à 2 heures, on réalise la polymérisation.

5. Procédé selon la revendication 4, caractérisé en ce qu'on ajoute du chlorure de cyanogène liquide à un mélange de 1 partie en poids de di- ou polyamine, 0,5 à 1,0 partie en poids d'eau en maintenant une température comprise entre 0 et 50°C, de préférence entre + 5 à 20°C, et ensuite on réchauffe entre 80 et 100°C et on polymérise en 30 à 90 minutes.

6. Procédé selon l'une des revendications 1 à 5, caractérisé en ce qu'on utilise une di- ou triamine de formule générale (I), dans laquelle R et R' représentent l'hydrogène et X est un groupe alkylène non ramifié de 4 à 10 atomes de C ou un groupe diéthylèneamino.
